# EUROPEAN PATENT APPLICATION

(11) **EP 4 224 303 A1**
(43) Date of publication of application: **09.08.2023**
(21) Application number: 23150831.8
(22) Date of filing: 10.01.2023
(51) Int. Cl.: G06F 3/04886, G06F 3/01, G06F 3/04883, G06F 3/023

(54) **CHARACTER INPUT DEVICE, CHARACTER INPUT METHOD, AND CHARACTER INPUT PROGRAM**

(30) Priority: 04.02.2022 JP 2022016079
(71) Applicant: OMRON Corporation, Kyoto 600-8530 (JP)
(72) Inventor: NOMURA, Riki, Muko-shi, 617-0002 (JP)
(74) Representative: Horn Kleimann Waitzhofer Patentanwälte PartG mbB

(57) **Abstract**

Provided is a technology that makes it possible to intuitively perform flick input and easily input characters. A character input device includes a character input unit, an operation detector, an input trajectory measuring unit, and a character switching unit. The character input unit receives a character input operation performed using flick input. The operation detector detects the character input operation received by the character input unit. The input trajectory measuring unit measures a length of an input trajectory from a start position to an end position of the character input operation detected by the operation detector. The character switching unit switches characters regularly from a first character corresponding to the start position of the character input operation in accordance with the length of the input trajectory to obtain a second character.

## Description

### CROSS-REFERENCES TO RELATED APPLICATIONS

This application claims priority to Japanese Patent Application No. 2022-016079 filed February 4, 2022, the entire contents of which are incorporated herein by reference.

### FIELD

The present invention relates to a technology for supporting character input.

### BACKGROUND

Various character input methods have been devised in which a user inputs characters by flick input using a software keyboard installed in an electronic device such as a smartphone. For example, JP 6135947B2 discloses a method for inputting a desired character by selecting a hiragana column including the hiragana character that is to be input with a finger and sliding the finger in either the vertical or the horizontal direction, for example.

JP 6135947B2 is an example of background art.

However, in the flick input performed using the configuration described in JP 6135947B2, the direction in which the finger is to be slid and a width by which the finger is to be slid to input the desired character are defined by the software keyboard. More specifically, when inputting the character " 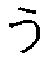 " ("u") included in the " 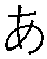 " ("a") column (" 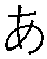 " ("a"), " 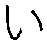 " ("i"), " 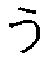 " ("u"), " 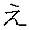 " ("e"), " 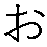 " ("o")) of the Japanese syllabary, the user first selects the " 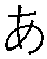 " column with his or her finger, and then slides the finger upward from the character " 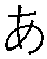 " to select the character " 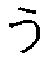 ". Thus, the user can input the intended character " 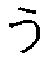 ".

That is, the direction in which the finger is to be slid to input the character " 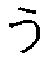 " is defined as upward, and accordingly, if the sliding direction of the finger shifts from upward, the desired character may not be input. When another character is input by mistake, the user needs to delete that character and input the desired character while paying attention to the operation direction. This may impair user friendliness.

Accordingly, an object of the present invention is to provide a technology that makes it possible to intuitively perform flick input and easily input characters.

### SUMMARY

A character input device of this invention is configured as described below in order to achieve the above object. Note that "an arrangement order of characters in a language of text that is to be input" described below is the Japanese syllabary order in the case where the language is Japanese, and is the alphabetical order in the case where the language is English.

Also, arcs and straight lines are described as examples of an "input trajectory" described below for the sake of convenience of description. However, the type of line of the "input trajectory" is not limited to this, and the "input trajectory" may be any continuous line such as a wave line, a zigzag line, a free curved line, or a line that repeatedly passes the same point, for example.

A character input device includes a character input unit, an operation detector, an input trajectory measuring unit, and a character switching unit. The character input unit receives a character input operation performed using flick input. The operation detector detects the character input operation received by the character input unit. The input trajectory measuring unit measures a length of an input trajectory from a start position to an end position of the character input operation detected by the operation detector. The character switching unit switches characters regularly from a first character corresponding to the start position of the character input operation in accordance with the length of the input trajectory to obtain a second character.

According to this configuration, a character that is to be input can be switched in accordance with the length of the input trajectory of flick input performed by a user. That is, the user can intuitively perform flick input, and convenience is improved.

The input trajectory measuring unit of the character input device determines that the input trajectory from the start position to the end position is an arc drawn in a clockwise direction. In this case, the character switching unit switches characters from the first character in an arrangement order of the characters in a language of text that is to be input, in accordance with the length of the input trajectory to obtain the second character.

The input trajectory measuring unit of the character input device determines that the input trajectory from the start position to the end position is an arc drawn in a counterclockwise direction. In this case, the character switching unit switches characters from the first character in an order that is reverse to an arrangement order of the characters in a language of text that is to be input, to obtain the second character.

The input trajectory measuring unit of the character input device determines that the input trajectory from the start position to the end position is a straight line. In this case, the character switching unit switches characters from the first character in an arrangement order of the characters in a language of text that is to be input, in accordance with the length of the straight line to obtain the second character.

A suspension period measuring unit of the character input device measures a period of time for which the character input operation is suspended between the start position and the end position. When it is determined by the suspension period measuring unit that the character input operation has been suspended for more than a predetermined period at a position for inputting the second character, the character switching unit switches the second character to the first character, and further switches characters regularly from the first character to obtain a second character.

The operation detector of the character input device determines the first character by detecting the start position and an operation direction of the character input operation.

According to the present invention, it is possible to provide a technology that makes it possible to intuitively perform flick input and easily input characters.

### BRIEF DESCRIPTION OF THE DRAWINGS

FIG. 1 is a diagram illustrating character input performed using a character input device in an application example.
FIG. 2 is a block diagram showing the configuration of a character input device in a first configuration example.
FIG. 3 is a diagram illustrating character input performed using the character input device in the first configuration example.
FIG. 4 is a diagram illustrating character input performed using the character input device in the first configuration example.
FIG. 5 is a flowchart showing the procedure performed by the character input device in an operation example.
FIG. 6 is a diagram illustrating character input performed using a character input device in a first modification.
FIG. 7 is a diagram illustrating character input performed using a character input device in a second modification.
FIG. 8 is a block diagram showing the configuration of a character input device in a second configuration example.
FIG. 9 is a diagram illustrating character input performed using the character input device in the second configuration example.
FIG. 10 is a flowchart showing the procedure performed by the character input device in the second configuration example.
FIG. 11 is a diagram illustrating character input performed using a character input device in a third modification.
FIG. 12 is a diagram illustrating character input performed using a character input device in a fourth modification.
FIG. 13 is a diagram illustrating character input performed using a character input device in a fifth modification.
FIG. 14 is a diagram illustrating character input performed using a character input device in a sixth modification.

### DETAILED DESCRIPTION

Hereinafter, embodiments for carrying out the present invention will be described with reference to the diagrams.

### 1. Application Example

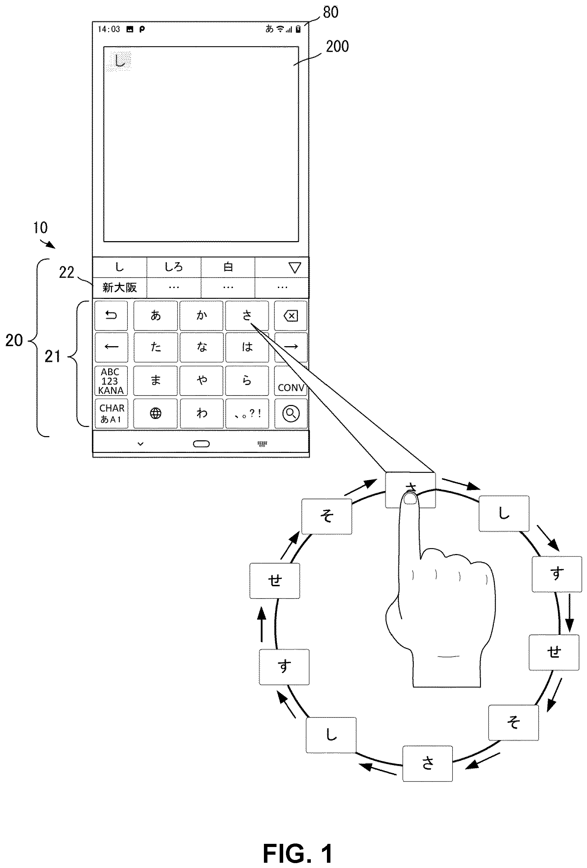

FIG. 1 is a diagram illustrating character input performed using a character input device 10. A user writes an email using the character input device 10. The user inputs characters to an email application.

The character input device 10 is installed in an electronic device such as a smartphone, for example. Note that this electronic device is not limited to a smartphone, and may be any device that allows a user to input text, such as a tablet or a personal computer.

A detailed description will now be given using an example of character input by a user. A smartphone 80 is equipped with a touch panel. The user starts an application (hereinafter referred to as an app) that is installed in the smartphone 80.

The user starts an email app, for example. The user inputs a character string to an input field 200. In this example, description will be given using an email app, but the type of app is not limited to this, and any app having a function that enables text to be input may be employed.

The character input device 10 receives a result of the user operating the touch panel of the smartphone 80. For example, the user starts the email app in order to write an email and inputs text. The character input device 10 detects an operation for starting character input by the user. The character input device 10 starts a display 20 (character input unit 21, candidate display 22) in response to detecting this operation for performing character input.

The following describes a procedure of character input by the user using a more specific example. The user inputs a character string " 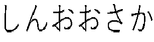 " ("Shinosaka" written with the hiragana characters "shi - n - o - o - sa - ka") by operating the character input unit 21.

First, the user taps the input field 200. As a result, the character input device 10 is activated. As described above, the character input unit 21 and the candidate display 22 are activated in the display 20.

Next, the user taps a position corresponding to the " 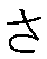 " ("sa") column of the Japanese syllabary on the character input unit 21 with his or her finger. Then, the user slides the finger in a clockwise direction. The character input device 10 detects the length of a trajectory of this clockwise sliding movement of the finger and switches through the characters included in the " 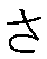 " column, i.e., " 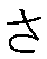 " ("sa"), " 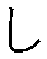 " ("shi"), " 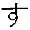 " ("su"), " 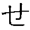 " ("se"), and " 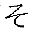 " ("so") in accordance with the length of the trajectory. At this time, the character input device 10 displays an input guide successively showing " 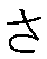 ", " 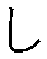 ", " 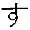 ", " 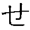 ", and " 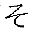 " in accordance with the trajectory of the finger.

The user stops sliding his or her finger upon recognizing that the input guide displays the character " 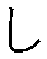 ". Next, when the user removes his or her finger from the touch panel, the character " 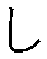 " is displayed in the input field 200. Furthermore, conversion candidates (including predictive conversion candidates) for the character " 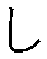 " are displayed in the candidate display 22.

This configuration enables the user to input a character corresponding to the distance by which the user has slid his or her finger on the character input unit 21 (touch panel). That is, this configuration enables the user to input a character more intuitively than with the flick input that enables the user to input a character by moving his or her finger in either the vertical or the horizontal direction. Therefore, user friendliness is improved.

### 2. First Configuration Example

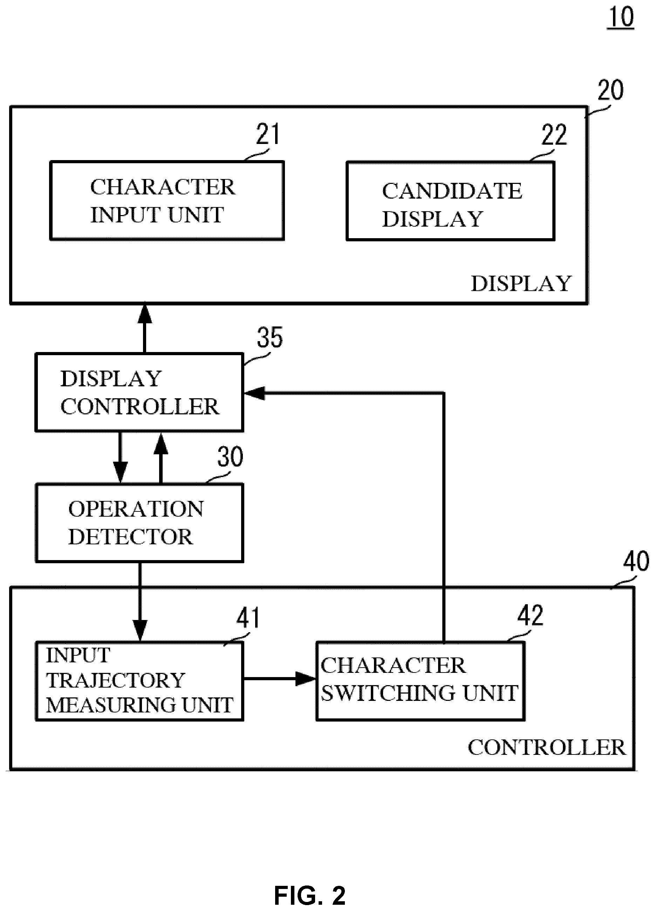

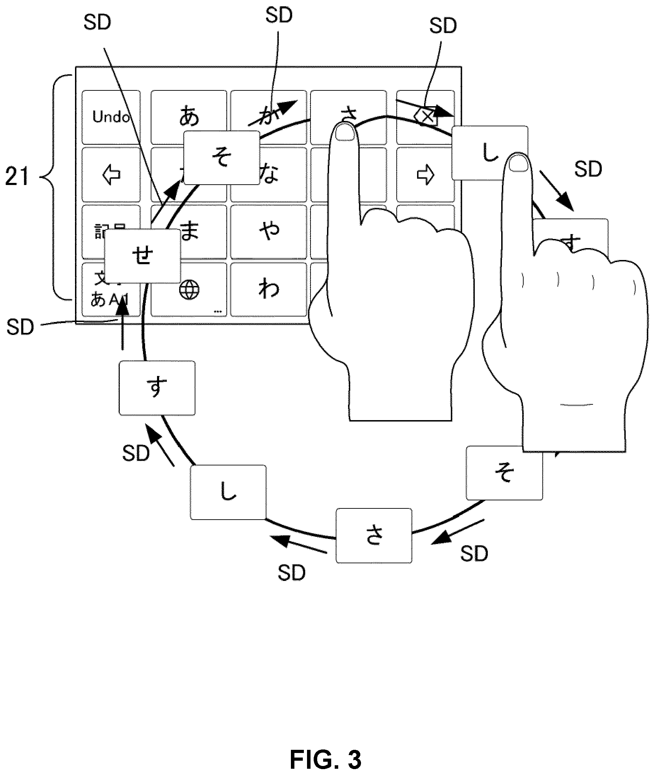

FIG. 2 is a block diagram showing the configuration of the character input device 10 in this example. FIG. 3 is a diagram illustrating character input performed using the smartphone 80 to which the character input device 10 in this example is applied. Note that the character input device 10 is not limited to a smartphone, but may be applied to any electronic device that allows a user to input text.

As shown in FIG. 2, the character input device 10 includes the display 20, an operation detector 30, a display controller 35, and a controller 40.

As described above, the display 20 includes the character input unit 21 and the candidate display 22. For example, as shown in FIG. 1, the character input unit 21 and the candidate display 22 are disposed on a screen of the smartphone 80. The character input unit 21 displays various keys for inputting characters. The candidate display 22 displays conversion candidates obtained using a method described later and conversion candidates that have been narrowed down. Note that the character input unit 21 is a software keyboard, for example.

The smartphone 80 is equipped with the touch panel. This touch panel detects operations performed by the user. More specifically, the touch panel detects operations performed on the input field 200 of the email app and the character input unit 21 and the candidate display 22 provided in the display 20. Operation detection includes, for example, detection of operation position, duration of operation, and temporal change in operation position. The results of the operation detection are output to the operation detector 30. The operation detector 30 outputs these results to the display controller 35 and the controller 40, in accordance with the result input from the touch panel. The display controller 35 causes the display 20 to perform display in accordance with the operation result.

The controller 40 includes an input trajectory measuring unit 41 and a character switching unit 42. Note that the controller 40 is constituted by a hardware CPU, a memory, and other electronic circuits. The hardware CPU operates as the input trajectory measuring unit 41 and the character switching unit 42, by executing a character input program according to this invention. Also, the memory has a region for deploying the character input program according to this invention and a region for temporarily storing data generated at times such as during execution of the character input program. The controller 40 may be an LSI that integrates a hardware CPU, memory and the like. Also, the hardware CPU may be a computer that executes a character input method according to this invention.

The input trajectory measuring unit 41 obtains a trajectory of an operation performed by the user with his or her finger on the character input unit 21. More specifically, the input trajectory measuring unit 41 obtains a distance from an input trajectory from a position (hereinafter referred to as a "start position") on the character input unit 21 at which the user started character input to a position (hereinafter referred to as an "end position") on the character input unit 21 at which the user ended the character input. For example, the input trajectory measuring unit 41 defines the character input unit 21 as an XY plane, and obtains a trajectory (hereinafter referred to as an "input trajectory") of the user's finger moved on the XY plane to input a character.

The character switching unit 42 switches characters in accordance with the length of the input trajectory obtained by the input trajectory measuring unit 41. Specifically, the user determines the start position by tapping a position corresponding to a desired column of the Japanese syllabary. The character switching unit 42 determines in advance a distance (hereinafter referred to as a "switching distance") by which a finger needs to be moved along the input trajectory in order to switch to the next character. Every time the user moves his or her finger by the switching distance while sliding the finger from the start position to the end position on the character input unit 21, the character is switched and an input guide is displayed in the character input unit 21. Details will be described later.

Next, the configuration of the character input device 10 will be described in detail using FIGS. 1, 2, 3, and 4. As shown in FIGS. 1, 2, and 3, the user starts the email app on the smartphone 80. In the following example, the user inputs the character string " 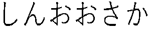 " ("shi - n - o - o - sa - ka").

First, a configuration for defining the switching distance by the character switching unit 42 of the character input device 10 will be described. The character switching unit 42 defines a switching distance SD as shown in FIG. 3. For example, in the case of the " 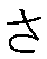 " column, the switching distance SD is the distance from the character " 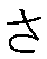 " to the character " 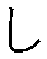 ". Likewise, the character switching unit 42 sets the switching distance SD for each of the characters included in the " 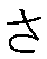 " column, such as the distance from the character " 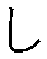 " to the character " 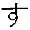 ", the distance from the character " 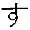 " to the character " 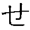 ", and so on. The switching distance SD may be the same for each character. That is, characters are switched every time the user's finger moves the switching distance SD while sliding on the character input unit 21.

The input trajectory measuring unit 41 measures the input trajectory of the user's finger on the character input unit 21. The input trajectory measuring unit 41 outputs a movement distance that is obtained from the input trajectory every time the user's finger moves, to the character switching unit 42.

The character switching unit 42 compares the movement distance and the switching distance SD. The character switching unit 42 switches characters every time the movement distance exceeds the switching distance SD. More specifically, every time the user's finger moves the switching distance SD, the character switching unit 42 switches characters, for example, from " 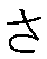 " to " 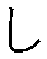 " and then from " 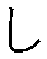 " to " 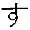 ". Every time the character switching unit 42 switches characters, the character switching unit 42 switches the guide displayed in the character input unit 21. Note that the character switching unit 42 may also be configured to switch the characters again to the character " 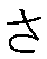 " after the last character " 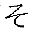 " in the "ð" column is displayed.

As shown in FIGS. 1 and 2, the user activates the input field 200 of the email app. The operation detector 30 detects that the input field 200 has been activated, and notifies the display controller 35 of the detection result. The display controller 35 displays the character input unit 21 and the candidate display 22.

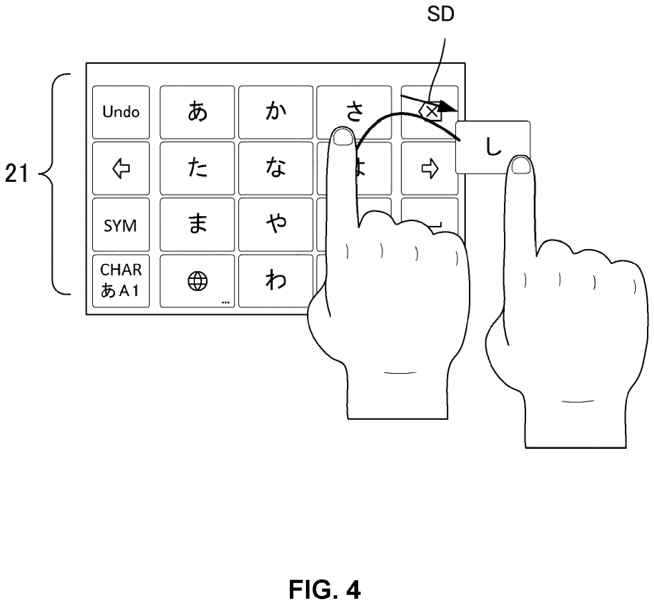

The user inputs the character string " 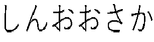 " by using the character input unit 21. As shown in FIG. 4, the user taps a position corresponding to the " 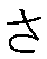 " column. The operation detector 30 detects that the " 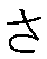 " column is selected. The user slides his or her finger from the character " 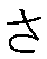 " in the clockwise direction.

The user slides his or her finger on the character input unit 21. The input trajectory measuring unit 41 outputs a movement distance obtained from the input trajectory of the user's finger, to the character switching unit 42. The character switching unit 42 compares the movement distance and the switching distance SD. At this time, the character switching unit 42 determines that the user's finger has moved by the switching distance SD, and switches the character " 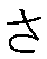 " to the character " 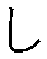 ". The character switching unit 42 notifies the character input unit 21 that the character " 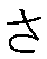 " was switched to the character " 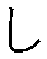 ". The character input unit 21 displays the character " 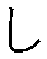 " as the input guide.

Upon recognizing that the desired character " 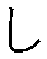 " is selected, the user removes his or her finger from the character input unit 21. As a result, the character " 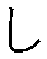 " is displayed in the input field 200. The user then inputs the next character or characters.

### 3. Operation Example

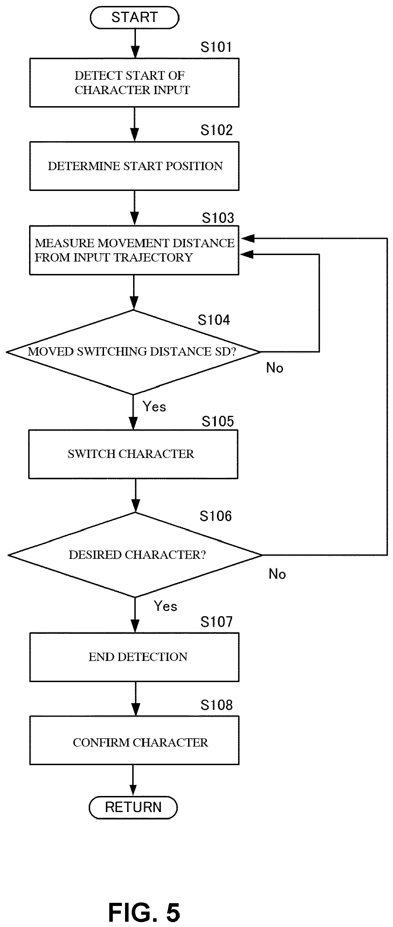

FIG. 5 is a flowchart showing the procedure performed by the character input device 10 in an operation example. The procedure performed by the character input device 10 will be described using FIGS. 1, 2, 3, 4, and 5.

The user starts the email app installed on the smartphone 80. The user taps the input field 200. The operation detector 30 notifies the display controller 35 that the input field 200 has been activated, so as to start the display 20. The display 20 displays the character input unit 21 and the candidate display 22.

The input field 200 receives character input by the user. The operation detector 30 detects the start of character input by the user (S101).

The user selects the " 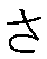 " column using the character input unit 21 to input the character " 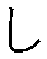 " , for example. The operation detector 30 detects that the user has selected the " 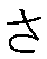 " column, and determines the start position (S102). The display controller 35 causes the character input unit 21 to display the character " 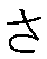 " as an input guide.

The input trajectory measuring unit 41 measures a movement distance obtained from an input trajectory of the user's finger (S103). Every time the input trajectory measuring unit 41 measures movement of the user's finger, the input trajectory measuring unit 41 outputs the movement distance to the character switching unit 42.

The character switching unit 42 compares the movement distance and the switching distance SD (S104). When the movement distance exceeds the switching distance SD (S104: Yes), the character switching unit 42 switches the character "ð" to the character " 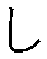 ". The character switching unit 42 notifies the display controller 35 of the switching to the character " 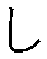 ". The display controller 35 causes the character input unit 21 to switch the input guide from the character " 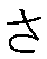 " to the character " 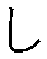 ". The character input unit 21 switches the input guide from the character " 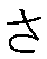 " to the character " 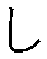 ".

The user then determines whether or not the character " 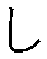 " is the desired character (S106). Upon deciding to input the character " 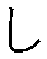 ", the user removes his or her finger from the character input unit 21. Upon detecting that the user has removed his or her finger from the character input unit 21, the operation detector 30 ends detection of the input trajectory (S107).

The display controller 35 notifies the display controller 35 that the character " 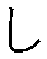 " was confirmed. The display controller 35 causes the input field 200 to display the character " 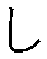 " (S108). Also, the display controller 35 causes the candidate display 22 to display conversion candidates (including predictive candidates) for the character " 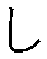 " obtained from a dictionary database (not shown) using a known search method.

Note that when the movement distance does not exceed the switching distance SD in step S104 (S104: No), the character input unit 21 continues displaying the character " 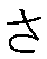 " as the input guide. The user continues sliding his or her finger on the character input unit 21. Accordingly, the input trajectory measuring unit 41 executes step S103 for measuring the movement distance from the input trajectory.

Also, when the character is not the character desired by the user in step S106 (S106: No), the user can continue sliding his or her finger on the character input unit 21. Accordingly, the input trajectory measuring unit 41 executes step S103 for measuring the movement distance from the input trajectory.

The configuration described above enables the user to easily input a character corresponding to a distance obtained from an input trajectory of sliding movement of the user's finger. Therefore, unlike conventional flick input, the user can input characters without paying attention to the direction in which the user has to slide his or her finger along the vertical or horizontal direction, and user friendliness and operability are improved.

Note that the switching distance SD in the above configuration is set to a suitable value. More specifically, the switching distance SD can be set in accordance with the size of the character input unit 21 of the smartphone, a tablet, or the like. Alternatively, the switching distance SD may also be determined in accordance with conditions of operation performed by the user. In other words, the switching distance SD can be determined based on the way in which the user usually performs a flick input operation or the speed (acceleration) of the flick input operation performed by the user.

Also, in the above configuration, characters are switched in such a manner that once the characters included in the " 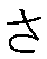 " column have been switched in the order from " 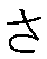 " to " 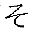 ", the characters are again switched in the order from " 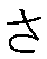 " to " 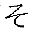 ". However, a configuration is also possible in which, after the characters included in the " 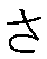 " column are switched in the order from " 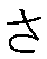 " to " 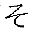 ", characters including a sonant mark ( 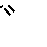 ) such as " 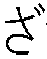 ", " 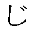 ", " 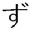 ", " 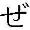 ", and " 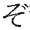 " are displayed. Also, in the case of a column including characters to which a p-sound mark (° ) can be added, a configuration is also possible in which the characters are switched to characters including the p-sound mark. Furthermore, in the case of the " 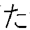 " column, for example, a small-sized character " 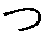 " representing *sokuon* in Japanese may also be displayed.

This configuration further improves user friendliness by enabling the user to easily select a character that the user wants to input.

### 4. First Modification

Next, a character input device according to a first modification will be described with reference to a diagram. Unlike the first configuration example in which the user slides his or her finger in the clockwise direction to input a character, in the first modification, the user slides his or her finger along a straight line.

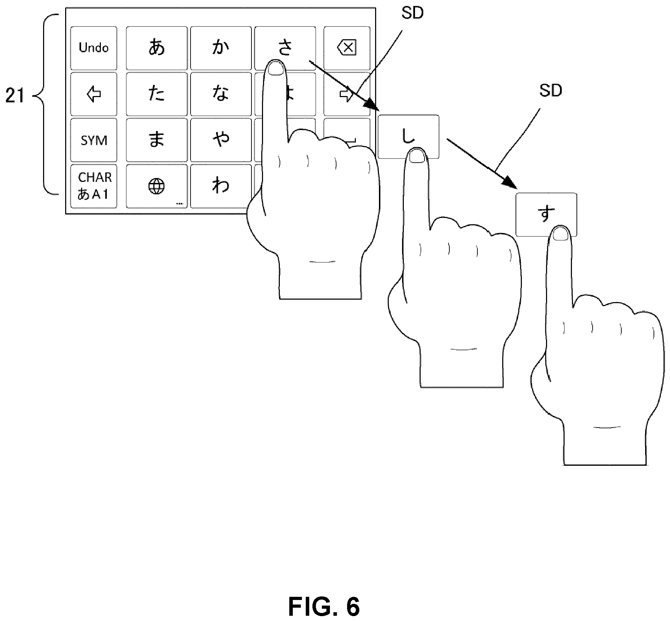

As shown in FIG. 6, the user taps a position corresponding to the " 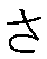 " column. The operation detector 30 detects that the " 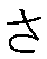 " column is selected. The user slides his or her finger from the character " 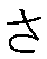 " along a straight line.

The user slides his or her finger along a straight line on the character input unit 21. The input trajectory measuring unit 41 outputs a movement distance obtained from the input trajectory of the user's finger, to the character switching unit 42. The character switching unit 42 compares the movement distance and the switching distance SD. At this time, the character switching unit 42 determines that the user's finger has moved by the switching distance SD, and switches the character " 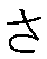 " to the character " 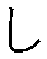 ". The character switching unit 42 notifies the character input unit 21 that the character "ð" was switched to the character " 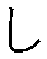 ". The character input unit 21 displays the character " 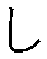 " as an input guide.

Upon recognizing that the desired character " 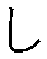 " is selected, the user removes his or her finger from the character input unit 21. As a result, the character " 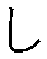 " is displayed in the input field 200. The user then inputs the next character or characters.

This configuration makes it possible to switch characters in accordance with the movement distance by which the user's finger is moved during flick input. Therefore, unlike conventional flick input, the user can input characters without paying attention to the direction in which the user has to slide his or her finger along the vertical or horizontal direction, and user friendliness and operability are improved.

### 5. Second Modification

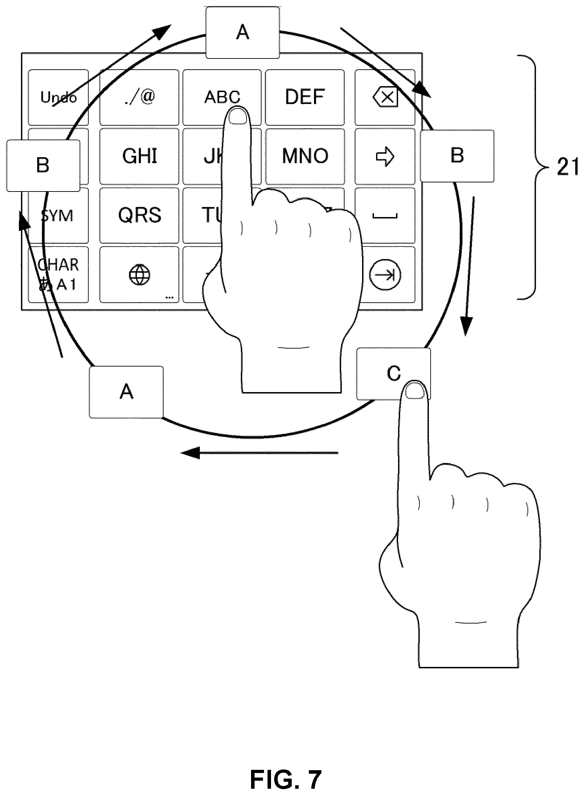

Next, a character input device according to a second modification will be described with reference to a diagram. The second modification differs from the first configuration example in that the input mode of the character input unit 21 in the first configuration example is a kana input mode, whereas the input mode of the character input unit 21 in the second modification is an alphabetic character input mode. The remaining configuration of the character input device 10 is similar to the character input device 10, and the description of similar parts will be omitted. Note that the character input unit 21 shown in FIG. 7 is in keypad layout, that is, 4 rows by 3 columns giving 12 keys in total, but may also be in QWERTY keyboard layout.

The following describes an example in which the character input unit 21 is in the alphabetic character input mode. The language that is input as characters in the alphabetic character input mode is not limited to English and may be another language. The language may, for example, be Chinese, which involves the user inputting a phonetic transcription of the word (desired character) he or she wants to input as characters, or German, which involves the user inputting the spelling of the word he or she wants to input in form of letters. The QWERTY keyboard layout mentioned above is effective to input letters to which accent marks are added, such as Vietnamese or French letters.

In this example, the user inputs the character "C" to the input field 200. To do so, the user taps a position at which "ABC" is displayed. The operation detector 30 detects that the position of "ABC" is selected. The user then slides his or her finger from the character "A" in the clockwise direction.

The user slides his or her finger on the character input unit 21. The input trajectory measuring unit 41 outputs a movement distance obtained from the input trajectory of the user's finger, to the character switching unit 42. The character switching unit 42 compares the movement distance and the switching distance SD. At this time, the character switching unit 42 determines that the user's finger has moved by the switching distance SD, and switches the character "A" to the character "B". The user then further moves his or her finger by the switching distance SD. In response to this movement, the character switching unit 42 determines that the user's finger has further moved by the switching distance SD, and switches the character "B" to the character "C".

Upon recognizing that the desired character "C" is selected, the user removes his or her finger from the character input unit 21. As a result, the character "C" is displayed in the input field 200. The user then inputs the next character or characters.

With this configuration, the user can easily input characters in the case where the character input unit 21 is in the alphabetic character input mode as well. Unlike conventional flick input, the user can input characters without paying attention to the direction in which the user has to slide his or her finger, and user friendliness and operability are improved.

### 6. Second Configuration Example

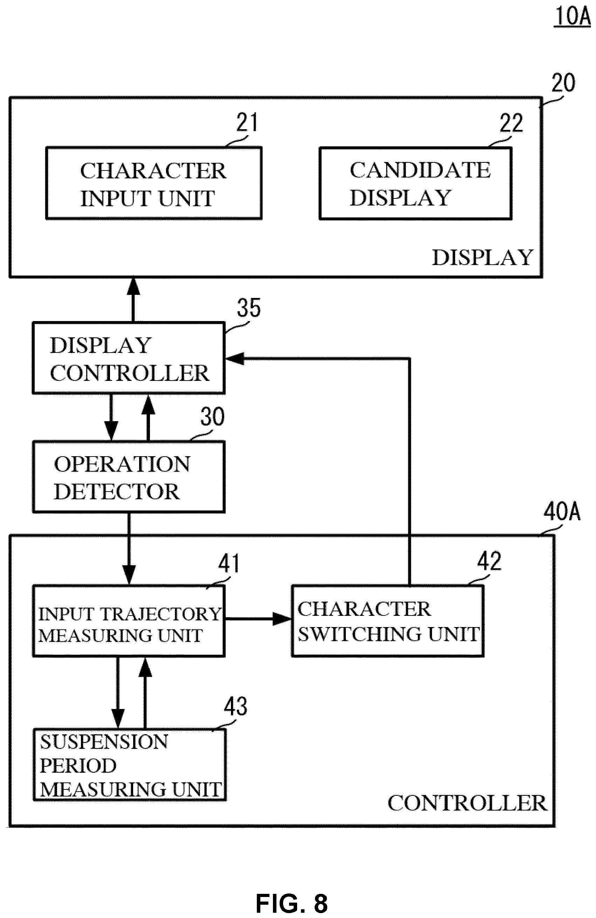

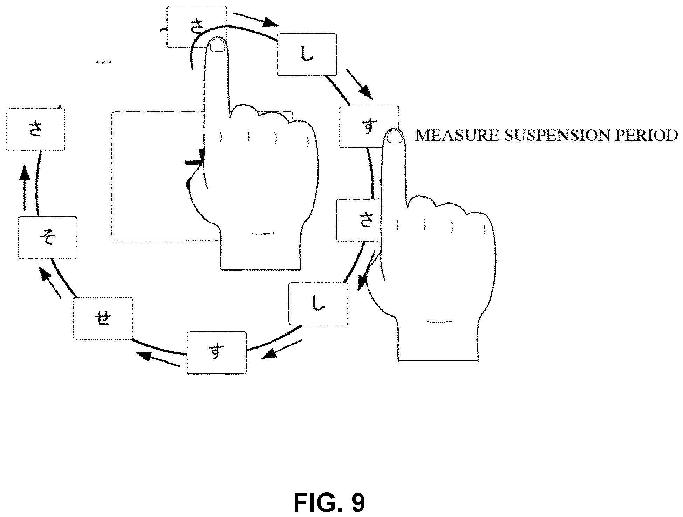

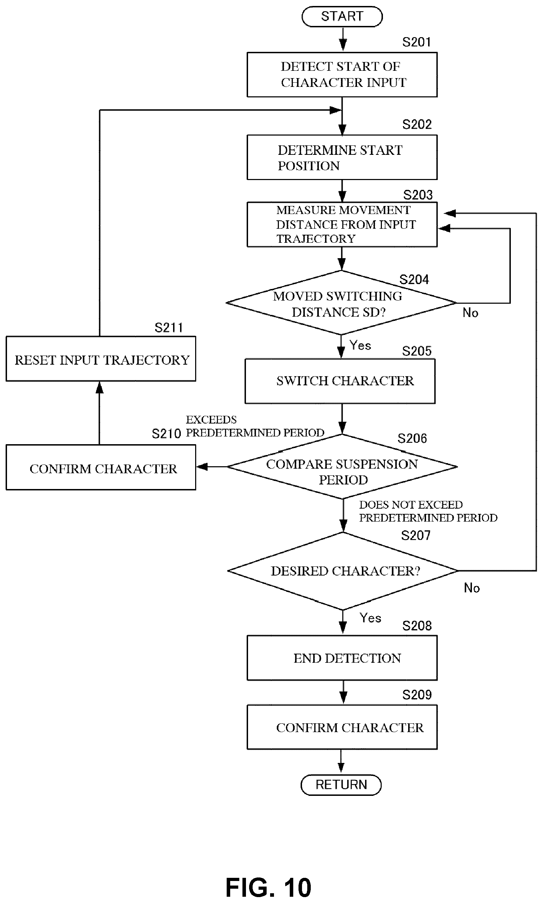

Next, a character input device according to a second configuration example will be described with reference to diagrams. FIG. 8 is a block diagram showing the configuration of a character input device 10A according to the second configuration example. FIG. 9 is a diagram illustrating character input performed using the character input device 10A according to the second configuration example. FIG. 10 is a flowchart showing the procedure performed by the character input device 10A according to the second configuration example.

As shown in FIGS. 8, 9, and 10, the character input device 10A according to the second configuration example differs from the character input device 10 according to the first configuration example in a configuration where the user suspends operation during flick input. The remaining configuration of the character input device 10A is similar to the character input device 10, and the description of similar parts will be omitted.

The following describes an example in which the user inputs a character string " 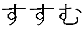 ", which includes characters included in the " 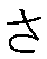 " column as shown in FIGS. 8 and 9. First, the configuration of the character input device 10A will be described using FIG. 8. As shown in FIG. 8, the character input device 10A includes a display 20, an operation detector 30, a display controller 35, and a controller 40A.

The controller 40A includes an input trajectory measuring unit 41, a character switching unit 42, and a suspension period measuring unit 43. The suspension period measuring unit 43 measures a period of time for which the user suspends an operation of sliding his or her finger in the clockwise direction on the character input unit 21 during the operation.

More specifically, as shown in FIG. 8, the input trajectory measuring unit 41 outputs a movement distance obtained from an input trajectory every time the user's finger moves, to the character switching unit 42. Also, the suspension period measuring unit 43 measures a period of time (hereinafter referred to as a "suspension period") for which movement of the user's finger is suspended (operation is stopped) while the user is performing the operation by moving his or her finger. At this time, if the suspension period exceeds a prescribed period (e.g., 2 seconds), the suspension period measuring unit 43 notifies the input trajectory measuring unit 41 that input operation was suspended.

The input trajectory measuring unit 41 resets (initializes) the currently measured input trajectory. Accordingly, when the user slides his or her finger in the clockwise direction on the character input unit 21, the input trajectory measuring unit 41 notifies the character switching unit 42, so as to switch the character to the first character of the column.

Next, a specific example of character input will be described using FIG. 9. The user slides his or her finger in the clockwise direction on the character input unit 21. Then, the user continues sliding his or her finger after the character " 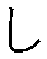 " is displayed. As a result, the input guide displays the character " 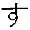 " in the character input unit 21.

The user suspends movement of his or her finger for a certain period of time in the state where the input guide showing the character " 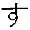 " is selected in the character input unit 21. The suspension period measuring unit 43 measures the suspension period, and when the suspension period exceeds a period determined in advance, the user further slides his or her finger from the character " 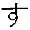 ". As a result, the input guide displays the character " 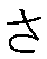 " again in the character input unit 21, and characters are switched from the character " 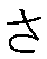 ".

On the other hand, a configuration is preferable in which the character " 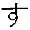 " is confirmed if the user removes his or her finger from the character input unit 21 when the suspension period has exceeded a predetermined period without the user sliding his or her finger from the position of the character " 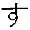 " on the character input unit 21.

Next, the procedure performed by the character input device 10A will be described. FIG. 10 is a flowchart showing the procedure performed by the character input device 10A according to the second configuration example. The procedure performed by the character input device 10A will be described using FIGS. 8, 9, and 10.

The user starts the email app installed on the smartphone 80. The user taps the input field 200. The operation detector 30 notifies the display controller 35 that the input field 200 has been activated, so as to start the display 20. The display 20 displays the character input unit 21 and the candidate display 22.

The input field 200 receives character input by the user. The operation detector 30 detects the start of character input by the user (S201).

The user selects the " 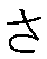 " column using the character input unit 21 to input the character " 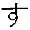 " , for example. The operation detector 30 detects that the user selected the " 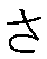 " column, and determines the start position (S202). The display controller 35 causes the character input unit 21 to display the character " 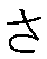 " as an input guide.

The input trajectory measuring unit 41 measures a movement distance obtained from an input trajectory of the user's finger (S203). Every time the input trajectory measuring unit 41 measures movement of the user's finger, the input trajectory measuring unit 41 outputs the movement distance to the character switching unit 42.

The character switching unit 42 compares the movement distance and the switching distance SD (S204). When the movement distance exceeds the switching distance SD (S204: Yes), the character switching unit 42 switches the character " 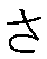 " to the character " 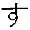 " past the character " 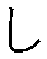 ". The character switching unit 42 notifies the display controller 35 of the switching to the character " 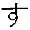 ". The display controller 35 switches the input guide from the character " 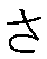 " to the character " 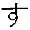 " via the character " 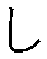 ".

At this time, the user recognizes that the character " 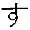 " is displayed, and suspends movement of his or her finger for a certain period of time in the state where the input guide showing the character " 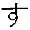 " is selected in the character input unit 21. The suspension period measuring unit 43 measures the suspension period. The suspension period measuring unit 43 compares the suspension period and the period determined in advance (S206).

When it is determined by the suspension period measuring unit 43 that the suspension period does not exceed the predetermined period, step S207 is executed. The user determines whether or not the character " 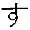 " is the desired character (S207). Upon deciding to input the character " 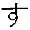 ", the user removes his or her finger from the character input unit 21. Upon detecting that the user has removed his or her finger from the character input unit 21, the operation detector 30 ends detecting the input trajectory (S208).

The display controller 35 notifies the display controller 35 that the character " 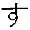 " was confirmed. The display controller 35 causes the input field 200 to display the character " 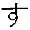 " (S209). Also, the display controller 35 causes the candidate display 22 to display conversion candidates (including predictive candidates) for the character " 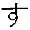 " obtained from a dictionary database (not shown) using a known search method.

Note that when it is determined in step S206 by the suspension period measuring unit 43 that the suspension period has exceeded the predetermined period, the character " 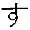 " is confirmed (S210). Furthermore, the suspension period measuring unit 43 notifies the input trajectory measuring unit 41, so as to reset the input trajectory (S211). The input trajectory measuring unit 41 resets (initializes) the input trajectory. Thereafter, the processing is executed again from step S202 (characters are switched again in order starting with the character " 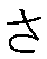 ").

Note that when the movement distance does not exceed the switching distance SD in step S204 (S204: No), the character input unit 21 continues displaying the input guide showing the character " 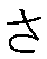 ". The user continues sliding his or her finger on the character input unit 21. Accordingly, the input trajectory measuring unit 41 executes step S203 for measuring the movement distance from the input trajectory.

Also, when the character is not the character desired by the user in step S207 (S207: No), the user continues sliding his or her finger on the character input unit 21. Accordingly, the input trajectory measuring unit 41 executes step S203 for measuring the movement distance from the input trajectory.

This configuration also enables the user to easily input a character corresponding to the distance obtained from the input trajectory of sliding movement of the user's finger. Therefore, unlike conventional flick input, the user can input characters without paying attention to the direction in which the user has to slide his or her finger along the vertical or horizontal direction, and user friendliness and operability are improved. Furthermore, the user can select a desired character in accordance with a suspension period that is measured. Furthermore, the user can input a desired character again by sliding his or her finger again from the position at which the user suspended movement of his or her finger. That is, the user can easily input the desired character without returning his or her finger to the start position of the sliding movement and further sliding the finger.

In addition to the above configuration, a configuration may also be adopted in which, when movement of the user's finger is suspended for more than at least twice as long as the predetermined period described above, for example, a character corresponding to the position at which the movement is suspended is successively input. For example, when the user does not move his or her finger from the position corresponding to the character " 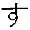 " for more than the predetermined period, the character " 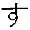 " may be successively input to make a character string " 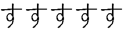 ", for example. In this case, the user can adjust the number of input characters (the number of characters " 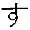 " included in the character string " 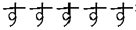 ") by removing his or her finger from the character input unit 21 at an appropriate time.

### 7. Third Modification

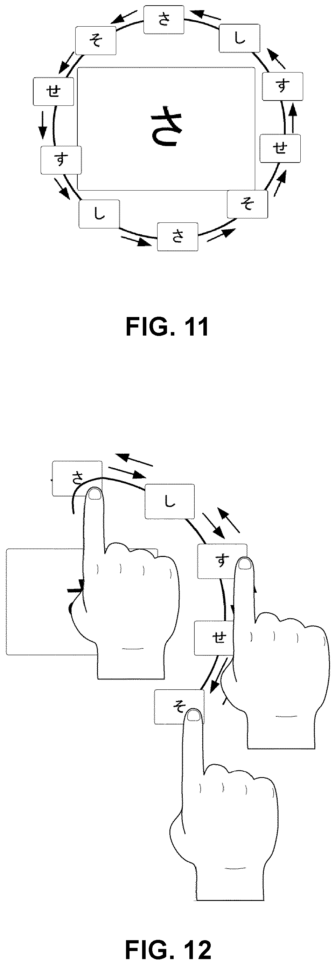

Next, a character input device according to a third modification will be described with reference to a diagram. FIG. 11 is a diagram illustrating character input performed using the character input device according to the third modification. The configuration according to the third modification differs from the first configuration example in operation of the case where the user moves his or her finger in the counterclockwise direction. The remaining configuration of the character input device 10 is similar to the character input device 10, and the description of similar parts will be omitted.

The user taps a position corresponding to the ð" column on the character input unit 21 with his or her finger. Then, the user slides the finger in the counterclockwise direction. The character input device 10 detects the length of a trajectory of this counterclockwise sliding movement of the finger and switches through the characters included in the " 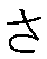 " column, i.e., " 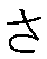 ", " 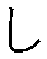 ", " 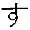 ", " 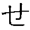 ", and " 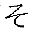 " in accordance with the length of the trajectory. The input trajectory measuring unit 41 detects that the input trajectory of the sliding movement of the user's finger is in the counterclockwise direction, and notifies the character input unit 21. That is, the input trajectory measuring unit 41 detects a movement distance and the turning direction in which the finger slides.

As a result, the character input unit 21 displays an input guide successively showing " 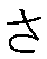 ", " 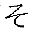 ", " 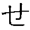 ", " 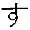 ", " 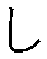 ", and " 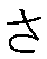 " in accordance with the trajectory of the finger. That is, the character input unit 21 displays characters by switching the characters in an order reverse to the Japanese syllabary order.

More specifically, let us assume that the user wants to input the character " 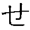 ". At this time, the input trajectory measuring unit 41 outputs a movement distance obtained from the input trajectory of the user's finger, to the character switching unit 42. The character switching unit 42 compares the movement distance and the switching distance SD. At this time, the character switching unit 42 determines that the user's finger has moved counterclockwise by the switching distance SD, and switches the character " 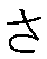 " to the character " 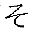 ". The user further moves his or her finger by the switching distance SD. In response to this, the character switching unit 42 determines that the user's finger has further moved counterclockwise by the switching distance SD, and switches the character " 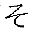 " to the character " 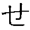 ".

Upon recognizing that the desired character " 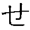 " is selected, the user removes his or her finger from the character input unit 21. As a result, the character " 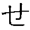 " is displayed in the input field 200. The user then inputs the next character or characters.

This configuration enables the user to easily input characters in the case where the user slides his or her finger in the counterclockwise direction as well. That is, if the user wants to input the characters " 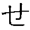 " or " 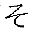 ", the user can slide his or her finger in the counterclockwise direction. Thus, the user can easily input a desired character.

Therefore, unlike conventional flick input, the user can input characters without paying attention to the direction in which the user has to slide his or her finger along the vertical or horizontal direction, and user friendliness and operability are improved. Furthermore, when the user wants to input characters in the order reverse to the Japanese syllabary order, the user can easily select a desired character by sliding his or her finger in the counterclockwise direction.

### 8. Fourth Modification

Next, a character input device according to a fourth modification will be described with reference to a diagram. FIG. 12 is a diagram illustrating character input performed using the character input device according to the fourth modification. The configuration according to the fourth modification differs from the first configuration example in operation of the case where the user moves his or her finger in the counterclockwise direction after moving the finger in the clockwise direction. The remaining configuration of the character input device 10 is similar to the character input device 10, and the description of similar parts will be omitted.

The following describes an example in which the user wants to input the character " 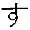 ". The user taps a position corresponding to the " 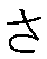 " column on the character input unit 21 with his or her finger. Then, the user slides the finger in the clockwise direction. The input trajectory measuring unit 41 detects the length of a trajectory of the clockwise sliding movement of the finger. The character switching unit 42 switches through the characters included in the " 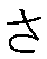 " column, i.e., " 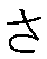 ", " 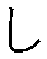 ", " 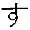 ", " 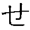 ", and " 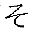 " in accordance with the length of the trajectory.

At this time, the user recognizes that the character " 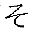 " is displayed as an input guide. The character switching unit 42 temporarily saves the display of the character " 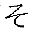 " as the input guide.

The user slides his or her finger in the counterclockwise direction from the position at which the character " 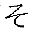 " is displayed. The operation detector 30 determines the character " 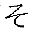 " displayed as the input guide to be the start position. The input trajectory measuring unit 41 detects the length of a trajectory of the counterclockwise sliding movement of the finger. The character switching unit 42 switches through the characters in the order of " 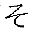 ", " 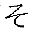 ", " 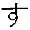 ", " 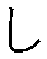 ", and " 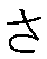 " in accordance with the length of the trajectory.

Upon recognizing that the desired character " 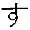 " is selected, the user removes his or her finger from the character input unit 21. As a result, the character " 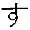 " is displayed in the input field 200. The user then inputs the next character or characters.

This configuration enables the user to combine the clockwise direction and the counterclockwise direction as the sliding direction of the finger. That is, even when the user has slid his or her finger past the character that the user wants to input, the user can easily input the desired character by changing the sliding direction of the finger from the clockwise direction to the counterclockwise direction.

### 9. Fifth Modification

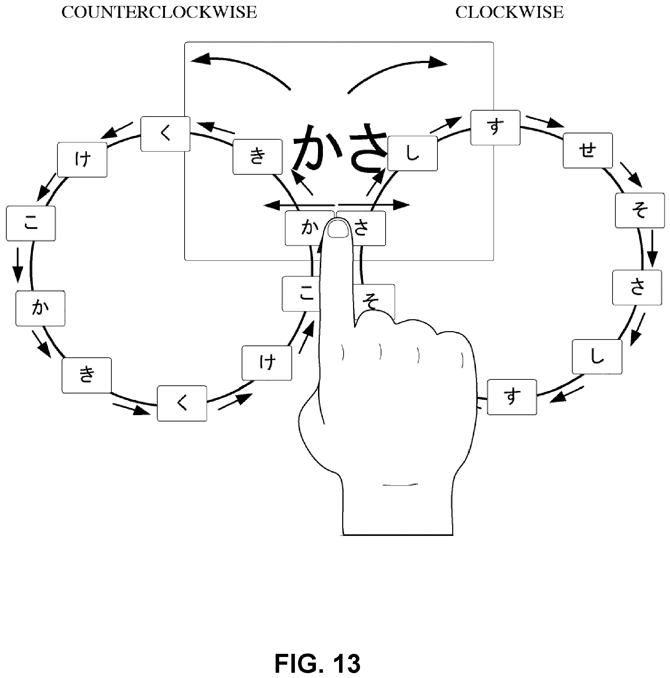

Next, a character input device according to a fifth modification will be described with reference to a diagram. FIG. 13 is a diagram illustrating character input performed using the character input device according to the fifth modification. The configuration according to the fifth modification differs from the first configuration example in that a region that enables the user to input the characters included in the " 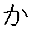 " column as well as the characters included in the " 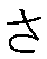 " column is defined. Furthermore, the character input device according to the fifth modification changes characters to be switched depending on whether the user slides his or her finger in the clockwise direction or the counterclockwise direction in the above region. The remaining configuration of the character input device 10 is similar to the character input device 10, and the description of similar parts will be omitted.

In the following example, the user starts to slide his or her finger from the region (hereinafter referred to as a "two-column input region") that enables the user to input the characters included in the " 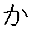 " column and the characters included in the " 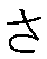 " column. The two-column input region is preferably set to a suitable region. Note that it is also possible to accumulate a history of operations performed by the user to make flick input on the character input unit 21 and determine the two-column input region based on the history.

The user starts to slide his or her finger from the two-column input region for the " 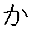 " column and the ð" column. At this time, the operation detector 30 determines in which direction, namely the direction corresponding to the " 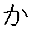 " column or the direction corresponding to the " 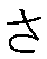 " column the user first flicks his or her finger in the two-column input region.

For example, when the user first flicks his or her finger to the left, the start position is set to the " 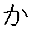 " column. On the other hand, when the user first flicks his or her finger to the right, the start position is set to the " 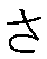 " column. At this time, a character corresponding to the determined start position is displayed as an input guide in the character input unit 21.

The following describes a case where the " 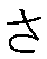 " column is determined to be the start position by the operation detector 30 at this time. The character input unit 21 displays the character " 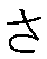 " as an input guide. The user slides his or her finger in the clockwise direction from the character " 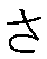 ". The input trajectory measuring unit 41 detects the length of a trajectory of the clockwise sliding movement of the finger. The character switching unit 42 switches through the characters included in the " 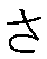 " column, i.e., " 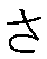 ", " 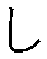 ", " 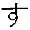 ", " 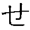 ", and " 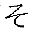 " in accordance with the length of the trajectory.

On the other hand, the user slides his or her finger in the counterclockwise direction from the character " 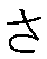 ". The input trajectory measuring unit 41 detects the length of a trajectory of the counterclockwise sliding movement of the finger. The character switching unit 42 switches through the characters included in the " 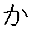 " column, i.e., " 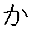 ", " 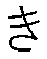 ", " 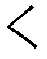 ", " 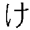 ", and " 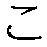 " in accordance with the length of the trajectory. Note that a configuration is also possible in which the character switching unit 42 causes the characters " 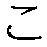 ", " 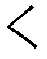 ", " 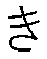 ", and " 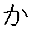 " to be displayed in this order when the user slides his or her finger in the counterclockwise direction.

In other words, it is possible to easily select the column of characters to be switched, by determining in which direction, namely the direction corresponding to the " 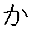 " column or the direction corresponding to the " 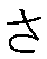 " column the user slides his or her finger from the start position.

This configuration enables the user to select characters to be switched in accordance with the sliding direction of his or her finger in the two-column input region. That is, if the keyboard is configured to enable the user to input characters included in two columns using a single key, the user can easily input a desired character by switching the sliding direction.

Note that the " 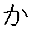 " column and the " 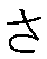 " column are switched in the above configuration. However, the number of columns that can be switched is not limited to two as in the case of the " 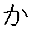 " column and the " 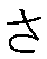 " column, and a configuration is also possible in which three or more columns are switched. For example, a configuration is also possible in which the user determines a start character (column) by sliding his or her finger in any of a plurality of directions such as up, down, left, and right, and further slides the finger in the clockwise direction, the counterclockwise direction, or the like from that position.

### 9. Sixth Modification

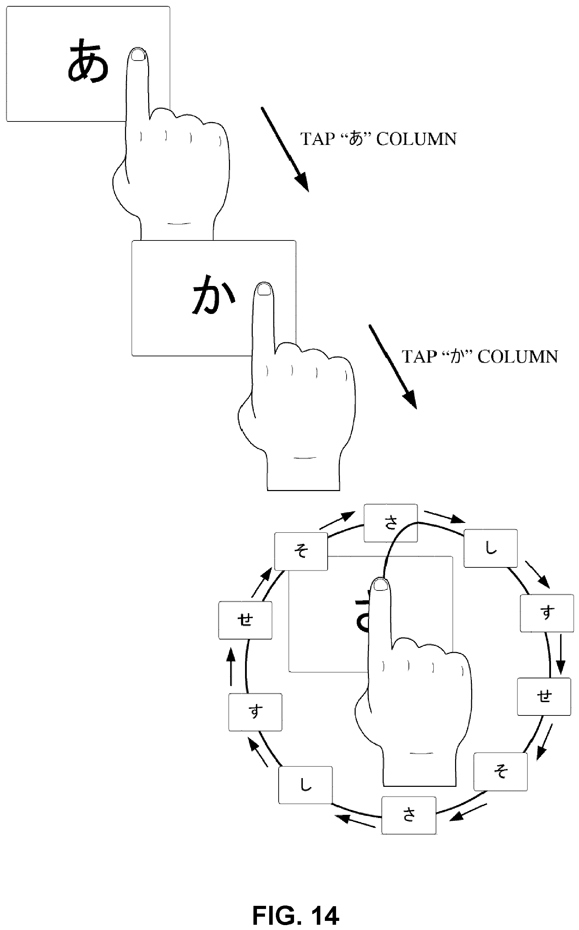

Next, a character input device according to a sixth modification will be described with reference to a diagram. FIG. 14 is a diagram illustrating character input performed using the character input device according to the sixth modification. This configuration differs from the first configuration example in that columns are switched by tapping. The remaining configuration of the character input device 10 is similar to the character input device 10, and the description of similar parts will be omitted.

The following describes an example in which the user inputs a character included in the " 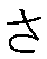 " column. The character input unit 21 is not in the keypad layout, and displays an indication of the " 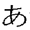 " column by default, for example. Here, "indication of the ' 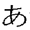 ' column" may mean for example that only the hiragana character ' 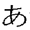 ' is displayed as a character that is representative for the entire " 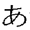 " column. When the user taps the indication of the " 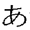 " column, the indication displayed in the character input unit 21 switches to the " 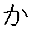 " column. Furthermore, when the user taps the indication of the " 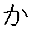 " column, the indication displayed in the character input unit 21 switches to the " 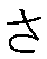 " column.

Upon recognizing that the indication displayed in the character input unit 21 was switched to the " 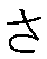 " column, the user starts to slide his or her finger. For example, the user slides his or her finger in the clockwise direction to switch through the characters included in the " 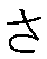 " column. Thus, the user can input a desired character.

That is, even if a region in which the character input unit 21 can be displayed is small, the user can switch characters included in respective columns by tapping, and easily input a character. Furthermore, the user can easily input a character corresponding to a distance obtained from an input trajectory of sliding movement of the user's finger. Therefore, unlike conventional flick input, the user can input characters without paying attention to the direction in which the user has to slide his or her finger, and user friendliness and operability are improved.

In the examples described above, characters are switched in the Japanese syllabary order when the finger is slid in the clockwise direction, and characters are switched in the order reverse to the Japanese syllabary order when the finger is slid in the counterclockwise direction. However, a configuration is also possible in which characters are switched in the order reverse to the Japanese syllabary order when the finger is slid in the clockwise direction, and characters are switched in the Japanese syllabary order when the finger is slid in the counterclockwise direction. That is, a configuration is preferable that allows the user to selectively switch settings for switching characters in the Japanese syllabary order in response to sliding movement of the user's finger, according to his or her dominant hand or a direction that is convenient for the user.

Note that the present invention is not limited to the above examples, and can be embodied by varying the constituent elements without departing from the gist of the invention at the implementation stage. Also, various inventions can be made by appropriately combining a plurality of constituent elements disclosed in the above examples. For example, some constituent elements may be deleted from the constituent elements described in the above examples. Furthermore, constituent elements in different examples may also be combined as appropriate.

Further, the correspondence relationship between the configuration according to the present invention and the above-described configuration can be described as in the following supplementary note.

### Supplementary Note

A character input device (10) includes a character input unit (21), an operation detector (30), an input trajectory measuring unit (41), and a character switching unit (42). The character input unit (21) receives a character input operation performed using flick input. The operation detector (30) detects the character input operation received by the character input unit (21). The input trajectory measuring unit (41) measures a length of an input trajectory from a start position to an end position of the character input operation detected by the operation detector (30). The character switching unit (42) switches characters regularly from a first character corresponding to the start position of the character input operation in accordance with the length of the input trajectory to obtain a second character.

### LIST OF REFERENCE NUMERALS

- SD: Switching distance
- 10, 10A: Character input device
- 20: Display
- 21: Character input unit
- 22: Candidate display
- 30: Operation detector
- 35: Display controller
- 40, 40A: Controller
- 41: Input trajectory measuring unit
- 42: Character switching unit
- 43: Suspension period measuring unit
- 80: Smartphone
- 200: Input field

## Claims

1. A character input device (10, 10A) comprising:
a character input unit (21) configured to receive a character input operation performed using flick input;
an operation detector (30) configured to detect the character input operation received by the character input unit (21);
an input trajectory measuring unit (41) configured to measure a length of an input trajectory from a start position to an end position of the character input operation detected by the operation detector (30); and
a character switching unit (42) configured to switch characters regularly from a first character corresponding to the start position of the character input operation in accordance with the length of the input trajectory to obtain a second character.

2. The character input device (10; 10A) according to claim 1,
wherein, when it is determined by the input trajectory measuring unit (41) that the input trajectory from the start position to the end position is an arc drawn in a clockwise direction, the character switching unit (42) switches characters from the first character in an arrangement order of the characters in a language of text that is to be input, in accordance with the length of the input trajectory to obtain the second character.

3. The character input device (10; 10A) according to claim 1 or 2,
wherein, when it is determined by the input trajectory measuring unit (41) that the input trajectory from the start position to the end position is an arc drawn in a counterclockwise direction, the character switching unit (42) switches characters from the first character in an order that is reverse to an arrangement order of the characters in a language of text that is to be input, to obtain the second character.

4. The character input device (10; 10A) according to any of claims 1 to 3,
wherein, when it is determined by the input trajectory measuring unit (41) that the input trajectory from the start position to the end position is a straight line, the character switching unit (42) switches characters regularly from the first character in accordance with the length of the straight line to obtain the second character.

5. The character input device (10, 10A) according to any of claims 1 to 4,
wherein the operation detector (30) determines the first character by detecting the start position and an operation direction of the character input operation.

6. The character input device (10A) according to any one of claims 1 to 5, further comprising:
a suspension period measuring unit (43) configured to measure a period of time for which the character input operation is suspended between the start position and the end position,
wherein, when it is determined by the suspension period measuring unit (43) that the character input operation has been suspended for more than a predetermined period at a position for inputting the second character, the character switching unit (42) switches the second character to the first character, and further switches characters regularly from the first character to obtain a second character.

7. A character input method executed by a computer, the character input method comprising:
a first step of receiving a character input operation performed using flick input;
a second step of detecting the character input operation received by the character input unit (21);
a third step of measuring a length of an input trajectory from a start position to an end position of the character input operation detected by the operation detector (30); and
a fourth step of switching characters regularly from a first character corresponding to the start position of the character input operation in accordance with the length of the input trajectory to obtain a second character.

8. A character input program causing a computer to execute:
a first step of receiving a character input operation performed using flick input;
a second step of detecting the character input operation received by the character input unit (21);
a third step of measuring a length of an input trajectory from a start position to an end position of the character input operation detected by the operation detector (30); and
a fourth step of switching characters regularly from a first character corresponding to the start position of the character input operation in accordance with the length of the input trajectory to obtain a second character.
